(19) Europäisches Patentamt
European Patent Office
Office européen des brevets

(11) **EP 2 616 803 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**06.07.2022 Patentblatt 2022/27**

(45) Hinweis auf die Patenterteilung:
**20.02.2019 Patentblatt 2019/08**

(21) Anmeldenummer: **11743220.3**

(22) Anmeldetag: **26.07.2011**

(51) Internationale Patentklassifikation (IPC):
**G01N 27/407** (2006.01)

(52) Gemeinsame Patentklassifikation (CPC):
**G01N 27/4072**

(86) Internationale Anmeldenummer:
**PCT/EP2011/062811**

(87) Internationale Veröffentlichungsnummer:
**WO 2012/034760 (22.03.2012 Gazette 2012/12)**

(54) **SENSORELEMENT ENTHALTEND EINE REFERENZELEKTRODE UND EINEN REFERENZKANAL**

SENSOR ELEMENT CONTAINING A REFERENCE ELECTRODE AND A REFERENCE CHANNEL

ÉLÉMENT DÉTECTEUR CONTENANT UNE ÉLECTRODE DE RÉFÉRENCE ET UN CANAL DE RÉFÉRENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2010 DE 102010040813**

(43) Veröffentlichungstag der Anmeldung:
**24.07.2013 Patentblatt 2013/30**

(73) Patentinhaber: **Robert Bosch GmbH**
**70442 Stuttgart (DE)**

(72) Erfinder:
• **SCHNEIDER, Jens**
**71229 Leonberg (DE)**
• **HANSELMANN, Annette**
**70372 Bad Cannstatt (DE)**
• **DIEHL, Lothar**
**70839 Gerlingen (DE)**

(56) Entgegenhaltungen:
| | |
|---|---|
| WO-A1-2009/156007 | DE-A1- 4 333 230 |
| DE-A1- 4 333 230 | DE-A1- 10 043 089 |
| DE-A1-102004 063 084 | DE-A1-102005 052 430 |
| DE-A1-102005 052 430 | DE-A1-102006 062 060 |
| DE-A1-102008 002 735 | US-A- 4 776 943 |
| US-A1- 2003 089 603 | US-A1- 2005 252 770 |

EP 2 616 803 B2

## Beschreibung

## Stand der Technik

Die Erfindung geht aus von bekannten Sensorelementen zur Erfassung einer Eigenschaft eines Gases in einem Messgasraum, wie sie beispielsweise in DE102005052430 A1, US2003/0089603 A1, DE4333230 A1, DE102008002735 A1 beschrieben sind und die alle einen offenen Referenzgaskanal aufweisen. Derartige Sensorelemente können zur qualitativen und/oder quantitativen Erfassung mindestens einer grundsätzlich beliebigen Eigenschaft des Gases eingesetzt werden, insbesondere zur Erfassung mindestens eines Anteils mindestens einer Gaskomponente eines Gases in dem Messgasraum, beispielsweise eines Partialdrucks und/oder eines Prozentsatzes der Gaskomponente. Insbesondere kann es sich bei dieser Gaskomponente um Sauerstoff, Stickstoff, Stickoxide, Kohlenwasserstoffe oder andere Arten von Gaskomponenten handeln, welche vorzugsweise spezifisch nachgewiesen werden können. Sensorelemente der genannten Art können insbesondere auf der Verwendung eines oder mehrerer Festelektrolyte basieren, also auf der Verwendung von Festkörpern, insbesondere keramischen Festkörpern, welche ionenleitende, insbesondere sauerstoffionenleitende, Eigenschaften aufweisen. Beispiele derartiger Festelektrolyte sind auf Zirkoniumdioxid basierende Festelektrolyte, wie beispielsweise Yttrium-stabilisiertes Zirkoniumdioxid (YSZ) und/oder Scandium-dotiertes Zirkoniumdioxid (ScSZ). Derartige Sensorelemente sind beispielsweise in Robert Bosch GmbH: Sensoren im Kraftfahrzeug, Ausgabe 2007, Seiten 154-159 beschrieben. Die Erfindung kann insbesondere auf planare Sprungsonden angewandt werden, wie sie beispielsweise in der genannten Literatur auf den Seiten 156-157 beschrieben sind, bei denen eine Elektrode als Messelektrode dem Messgasraum ausgesetzt ist und eine weitere Elektrode als Referenzelektrode über einen Referenzgaskanal mit der Umgebung verbunden ist. Die Erfindung ist jedoch ausdrücklich auch auf andere Arten von Sensorelementen übertragbar. Insbesondere kann die Erfindung auch auf Sprungsonden mit gepumpter Referenz angewandt werden. Derartige Sprungsonden mit gepumpter Referenz sind beispielsweise in WO 2009/156007 A1 beschrieben. Aus dem Stand der Technik sind Auslegungen eines Pumpreferenzkanals mit poröser Füllung und einem resultierenden Grenzstrom an Luft von 0,1 bis 0,4 $\mu$A bei statischer Messung bekannt. Ein mittlerer Referenzpumpstrom beträgt typischerweise 22,5 $\mu$A, und das Sensorelement wird typischerweise mit einer Gegenspannung $U_{Gegen}$ = 1,61 V betrieben.

Bei dem Referenzpumpstrom nach dem Stand der Technik ergibt sich in der Regel an der Referenzelektrode durch den entstehenden Überdruck im Referenzgaskanal ein SignalOffset von 100 mV in einer Ausgangsspannung. Der durch die Gegenspannung induzierte Signaloffset der Sprungsonde ist dabei in der Regel abhängig von der Luftzahl des Gases, da bei hoher Ausgangsspannung, also bei fettem Abgas, nur ein kleiner Referenzpumpstrom von ca. 15 $\mu$A fließt und bei niedriger Ausgangsspannung (mageres Abgas) ein hoher Referenzpumpstrom von ca. 31 mA. Dieses Offset ändert sich dynamisch um 15 mV bis zum statischen Wert, da der Druck im Referenzkanal erst aufgebaut oder abgebaut werden muss. Die Zeitkonstanten können mit bis zu 10 Sekunden zu einer erheblichen Verfälschung des Sensorelementsignals über viele Sekunden führen. Der statische und der dynamische Fehler sind dabei in der Regel von der fertigungsbedingten Streuung des Referenzkanals abhängig. Dadurch kann eine 4$\sigma$ - Streuung des Sensorelementsignals von mehr als 10 mV entstehen.

Für das Kurzzeitverhalten und das Langzeitverhalten derartiger Sensorelemente mit gepumpter Referenzelektrode spielen Strömungseffekte und Diffusionseffekte eine Rolle. Aufgrund des in der Regel hohen Strömungswiderstands des Referenzkanals üblicher Sensorelemente entsteht ein störender Überdruck im Referenzkanal, der das Offset im Sensorelementsignal erzeugt. Aufgrund des in der Regel geringen Diffusionswiderstands des Referenzkanals entsteht hingegen ein störender Eintritt von Fettgas von der Referenzseite her, welcher zu einem aus der Literatur bekannten characteristic shift down (CSD) führen kann. Wünschenswert wäre daher ein Sensorelement, welches die Nachteile bekannter Sensorelemente zumindest weitgehend vermeidet und welches insbesondere die oben beschriebene dynamische Offset-Änderung vermeidet oder zumindest verringert und gleichzeitig geringe CSD-Effekte aufweist.

## Offenbarung der Erfindung

Es werden dementsprechend ein Sensorelement und eine Sensorvorrichtung zur Erfassung des Anteils von Sauerstoff eines Gases in einem Messgasraum vorgeschlagen, welche diese Aufgabe zumindest weitgehend lösen. Insbesondere kann die Erfindung bei Sprungsonden mit gepumpter Referenzelektrode zum Nachweis von Sauerstoff in einem Abgas einer Verbrennungsmaschine eingesetzt werden, so dass der Messgasraum insbesondere als Abgastrakt einer Verbrennungsmaschine ausgestaltet sein kann. Auch andere Einsatzgebiete sind jedoch grundsätzlich denkbar.

Das Sensorelement weist mindestens eine Elektrode auf, welche im Folgenden auch als Referenzelektrode bezeichnet wird, ohne Beschränkung weiterer möglicher Einsatzzwecke der mindestens einen Elektrode. Die Elektrode ist über mindestens einen Referenzgaskanal mit mindestens einem Umgebungsraum verbunden. Bei diesem Umgebungsraum kann es sich grundsätzlich um einen beliebigen Gasspeicher handeln, insbesondere einen Gasspeicher mit praktisch unveränderlicher Gaszusammensetzung. Besonders bevorzugt kann es sich bei diesem Umgebungsraum um eine Umgebung einer Verbrennungsmaschine handeln, insbesondere Luft. Der Umgebungsraum kann insbesondere von dem Messgasraum getrennt ausgestaltet sein, so dass ein Gasausgleich zwischen dem Umgebungsraum und dem Messgasraum zumindest weitgehend verhindert wird, insbesondere auf einer Zeitskala von mindestens 100 Sekunden. In dem Umgebungsraum kann insbesondere Luft vorhanden sein.

Die Elektrode kann auf verschiedene Weisen an den Referenzgaskanal angeordnet sein. So kann die Elektrode in einem Elektrodenhohlraum angeordnet sein, welcher über den Referenzgaskanal mit dem Umgebungsraum verbunden ist. Besonders bevorzugt ist die Elektrode jedoch innerhalb des Referenzgaskanals angeordnet, beispielsweise an einem Ende des Referenzgaskanals. Der Referenzgaskanal ist offen und ungefüllt ausgestaltet. Die Elektrode kann als flächige Elektrode auf einer Wand des Elektrodenhohlraums und/oder des Referenzgaskanals angeordnet sein. Alternativ oder zusätzlich kann die Elektrode jedoch auch ganz oder teilweise in dem Elektrodenhohlraum bzw. in dem Referenzgaskanal verteilt vorliegen, beispielsweise indem ein Elektrodenmaterial verwendet wird, welches porös ist und welches den Elektrodenhohlraum und/oder den Referenzgaskanal vollständig oder teilweise ausfüllt. Im Folgenden wird als Referenzgaskanal und als dessen Längserstreckung der Abschnitt des Referenzkanals betrachtet, welcher sich von dem am weitesten von dem Umgebungsraum entfernten Teil der Elektrode bis hin zum Umgebungsraum erstreckt. Unabhängig davon können jenseits der Elektrode ein oder mehrere weitere Abschnitte des Referenzgaskanals angeordnet sein, welche jedoch für die folgenden Überlegungen außer Betracht bleiben sollen.

Erfindungsgemäß weist der Referenzgaskanal einen Strömungswiderstand und einen Diffusionswiderstand auf. Unter einem Strömungswiderstand ist dabei derjenige Widerstand zu verstehen, welchen der Referenzgaskanal einer Gesamtdruckdifferenz $\Delta p_g$ entgegensetzt:

$$R_{Strömung} = \frac{\Delta p_g}{I_p^{Strömung}} \qquad (1)$$

Dabei bezeichnet $R_{Strömung}$ den Strömungswiderstand, und $I_p^{Strömung}$ bezeichnet den Strömungsanteil eines Gasaustauschs durch den Referenzgaskanal, welcher durch den Druckunterschied $\Delta p_g$ angetrieben wird. Der Diffusionswiderstand, welcher im Folgenden auch als $R_{Diffusion}$ bezeichnet wird, ist derjenige Widerstand, welchen der Referenzgaskanal einer Diffusionsströmung entgegensetzt, die durch einen Konzentrationsunterschied, insbesondere einen Partialdruckunterschied, einer Gaskomponente angetrieben wird:

$$R_{Diffusion} = \frac{\Delta p_i}{I_p^{Diffusion}} \qquad (2)$$

Dabei bezeichnet $R_{Diffusion}$ den Diffusionswiderstand, $\Delta p_i$ die Partialdruckdifferenz der Gaskomponente i, und $I_p^{Diffusion}$ den Diffusionsstrom der Gaskomponente i.

Durch eine Volumenstrombetrachtung, beispielsweise nach Hagen-Poiseuille, lässt sich zeigen, dass das Verhältnis aus dem Strömungsanteil $I_p^{Strömung}$ und der wirksamen offenen Fläche des Referenzgaskanals proportional ist zu $d^2$, wobei d ein Äquivalentradius des Referenzgaskanals ist. Für den effektiven Diffusionsstrom lässt sich hingegen zeigen, dass, da sowohl dieser effektive Diffusionsstrom als auch die wirksame offene Fläche des Referenzgaskanals mit $d^2$ ansteigen, das Verhältnis aus $I_p^{Diffusion}$ und der wirksamen offenen Fläche konstant ist.

Die Erfindung beruht auf der Erkenntnis, dass bei herkömmlichen Sensorelementen mit gepumpter Referenz in der Regel das Verhältnis

$$m = \frac{R_{Strömung}}{R_{Diffusion}} \qquad (3)$$

des Strömungswiderstands zum Diffusionswiderstand, insbesondere bei porös gefüllten Referenzgaskanälen, zu groß ist. So ist dieses Verhältnis bei üblichen Sensorelementen ca. 0,2, so dass ein erheblicher Überdruck an der Elektrode entsteht, bei gleichzeitig hoher CSD-Vermeidung. Es wird dementsprechend erfindungsgemäß vorgesehen, das Sensorelement derart auszugestalten, dass das Verhältnis m zwischen dem Strömungswiderstand und dem Diffusionswiderstand kleiner ist als 0,1. Besonders bevorzugt kann dieses Verhältnis m kleiner sein als 0,05 und besonders bevorzugt höchstens 0,01, insbesondere höchstens 0,005 oder sogar höchstens 0,001 betragen.

Insbesondere kann der Referenzgaskanal mit einem extrem kleinen Querschnitt so ausgelegt werden, dass eindiffundierendes Fettgas jederzeit vom Referenzpumpstrom abreagiert werden kann. Da das Fettgas nicht unter Überdruck steht, kann dieses nicht durch Strömung eintransportiert werden. Der Referenzgaskanal kann insbesondere als offener Kanal mit kleinem Strömungswiderstand versehen werden, damit der entstehende Überdruck $\Delta p_g$ in der Referenz praktisch unmittelbar über einen Ausstrom durch den Referenzgaskanal abgebaut werden kann. Das Verhältnis m aus Strömungswiderstand und Diffusionswiderstand für einen offenen Kanal kann beispielsweise nur noch 0,001 betragen. Daher entstehen bei den verschiedenen Referenzpumpströmen und bei verschiedenen Grenzströmen des Referenzgaskanals in der Regel keine unterschiedlichen Drücke in der Referenz.

Der Referenzgaskanal hat eine wirksame Flä-

che von 900 $\mu$m$^2$ bis 2.500 $\mu$m$^2$. Unter einer wirksamen offenen Fläche ist dabei bei einem ungefüllten Referenzgaskanal, welcher im Rahmen der vorliegenden Erfindung bevorzugt ist, die gesamte Querschnittsfläche zu verstehen.

Ist der Referenzgaskanal derart ausgestaltet, dass dieser einen über seine Länge hinweg nicht-konstanten Querschnitt aufweist, so kann anstelle der wirksamen offenen Fläche eine mittlere wirksame offene Fläche über den Referenzgaskanal hinweg angesetzt werden. Der Referenzgaskanal ist, wie oben ausgeführt, vorzugsweise ungefüllt ausgestaltet. Dieser kann jedoch auch ganz oder teilweise gefüllt sein mit mindestens einem porösen Material. Unter einem ungefüllten Referenzgaskanal ist dabei ein Kanal zu verstehen, welcher zumindest weitgehend frei ist von einer Füllung mit einem porösen, gasdurchlässigen Material. Insbesondere im Bereich der Elektrode kann jedoch eine derartige Füllung auftreten, da, wie oben ausgeführt, die Elektrode selbst in ein poröses Material eingebracht sein kann. Zumindest ab dem Umgebungsraum am nächsten liegenden Ende der Elektrode bis hin zum Ende des Referenzkanals sollte dieser Referenzkanal jedoch vorzugsweise offen ausgestaltet sein.

Das Sensorelement kann auf verschiedene Weisen vorteilhaft weitergebildet werden. So kann das Sensorelement insbesondere weiterhin mindestens ein Heizelement aufweisen, welches eingerichtet sein kann, um das Sensorelement an der Elektrode auf eine Temperatur $T_{el}$ von mindestens 600 °C bis 800 °C aufzuheizen. Auch darüber hinausgehende Temperaturen sind möglich. Das Sensorelement wird dann vorzugsweise derart ausgestaltet, dass mehr als die Hälfte des Referenzgaskanals in einem Bereich des Sensorelements angeordnet ist, in welchem die Temperatur des Sensorelements nicht mehr als 0,8 $T_{el}$ beträgt, insbesondere nicht mehr als 0,75 $T_{el}$ und besonders bevorzugt nicht mehr als 0,7 $T_{el}$. Der Referenzgaskanal kann insbesondere mindestens einen nicht-geraden Bereich aufweisen, also einen Bereich, in welchem der Referenzgaskanal keinen geraden Verlauf aufweist. Dieser nicht-gerade Bereich kann beispielsweise durch Ausgestaltung mit mindestens einem Mäander und/oder mindestens einer Doppel-oder Mehrfachschlaufe erfolgen. Auch andere Möglichkeiten, den Referenzgaskanal künstlich in einem Bereich des Sensorelements zu verlängern, sind denkbar. Insbesondere kann der nicht-gerade Bereich in einem Bereich des Sensorelements angeordnet sein, in welchem im Betrieb des Sensorelements die Temperatur des Sensorelements nicht mehr als 0,8 $T_{el}$ beträgt, insbesondere nicht mehr als 0,75 $T_{el}$ und besonders bevorzugt nicht mehr als 0,7 $T_{el}$. Insbesondere kann der nicht-gerade Bereich in einem Bereich des Sensorelements angeordnet sein, in welchem mindestens ein Anschlusskontakt der Elektrode angeordnet ist, also einem Bereich, welcher von außen kontaktierbar ist.

Der Referenzgaskanal kann mit einem konstanten Querschnitt über seine Länge hinweg ausgestaltet sein. Dieser kann jedoch auch mindestens eine Verengung aufweisen, insbesondere eine Stelle, an welcher der Querschnitt des Referenzgaskanals minimal wird. Die Verengung kann insbesondere in einem Bereich angeordnet sein, in welchem im Betrieb des Sensorelements die Temperatur des Sensorelements nicht mehr als 0,8 $T_{el}$ beträgt, insbesondere nicht mehr als 0,75 $T_{el}$ und besonders bevorzugt nicht mehr als 0,7 $T_{el}$. Insbesondere kann diese Verengung wiederum in einem Bereich angeordnet sein, in welchem mindestens ein Anschlusskontakt der Elektrode angeordnet ist.

Das Sensorelement weist erfindungsgemäß mindestens eine weitere Elektrode auf. Die Elektrode und die mindestens eine weitere Elektrode sind erfindungsgemäß über mindestens einen Festelektrolyten, vorzugsweise über mindestens einen keramischen Festelektrolyten, miteinander verbunden und können beispielsweise mindestens eine Zelle bilden. Diese mindestens eine Zelle kann im Betrieb des Sensorelements beispielsweise als Pumpzelle und/oder als Potenzialmesszelle, beispielsweise als Nernstzelle, genutzt werden. Im Rahmen des vorgeschlagenen Betriebs des Sensorelements ist auch eine Doppelfunktion möglich, so dass beispielsweise die Elektrode sowohl als Referenzelektrode für eine Nernstspannungsmessung als auch als Pumpelektrode für eine gepumpte Referenz eingesetzt werden kann. Die mindestens eine weitere Elektrode ist erfindungsgemäß mit Gas aus dem Messgasraum beaufschlagbar, insbesondere über mindestens eine gasdurchlässige poröse Schutzschicht. Auch andere Ausgestaltungen sind jedoch grundsätzlich möglich. Die mindestens eine weitere Elektrode kann beispielsweise auf einer Oberfläche eines Schichtaufbaus des Sensorelements angeordnet sein, wohingegen die Referenzelektrode in einer tiefer gelegenen Schichtebene, beispielsweise auf einer der mindestens einen weiteren Elektrode gegenüberliegenden Seite des Festelektrolyten, angeordnet sein kann. Alternativ kann jedoch auch die mindestens eine weitere Elektrode im Inneren eines Schichtaufbaus angeordnet sein und beispielsweise über mindestens eine Gasverbindung mit dem Messgasraum in Verbindung stehen. Verschiedene Ausgestaltungen sind möglich.

In einem weiteren Aspekt der vorliegenden Erfindung wird eine Sensorvorrichtung zur Erfassung mindestens einer Eigenschaft eines Gases in einem Messgasraum vorgeschlagen. Diese Sensorvorrichtung umfasst mindestens ein Sensorelement gemäß einer oder mehreren der oben beschriebenen Ausgestaltungen. Weiterhin umfasst die Sensorvorrichtung mindestens eine mit dem Sensorelement verbindbare Steuerung. Der Begriff verbindbar bezeichnet dabei einen Zustand, in welchem eine Verbindung erst noch hergestellt werden kann oder auch einen Zustand, in welchem diese Verbindung bereits besteht. Diese Verbindung kann beispielsweise über mindestens eine Schnittstelle erfolgen, welche permanent oder auch lösbar ausgestaltet sein kann. Alternativ oder zusätzlich kann die Steuerung jedoch auch ganz oder teilweise in das Sensorelement integriert sein.

Die Steuerung ist eingerichtet, um die Elektrode als gepumpte Referenzelektrode zu betreiben. Bei diesem Betrieb wird mindestens eine Spannung zwischen der gepumpten Referenzelektrode und mindestens einer weiteren Elektrode des Sensorelements erfasst. Weiterhin wird bei dem Betrieb, gleichzeitig oder zeitversetzt zu der Erfassung der Spannung, über mindestens einen Referenzpumpstrom Sauerstoff zu der gepumpten Referenzelektrode gepumpt. Beispielsweise kann die Steuerung, um den genannten Betrieb zu gewährleisten, mindestens eine Messvorrichtung umfassen, mittels derer die Spannung zwischen der gepumpten Referenzelektrode und der mindestens einen weiteren Elektrode erfasst werden kann, beispielsweise eine Spannungsmessvorrichtung. Weiterhin kann die Steuerung beispielsweise mindestens eine Pumpstromquelle und/oder mindestens eine Pumpspannungsquelle umfassen, um eine Pumpzelle mit einem Pumpstrom und/oder einer Pumpspannung zu beaufschlagen, derart, dass Sauerstoff gepumpt wird. Das Sensorelement kann einzellig oder auch mehrzellig ausgestaltet sein. Entsprechend können für die Spannungsmessung und die Pumpstrommessung gleiche oder auch unterschiedliche Zellen des Sensorelements eingesetzt werden, wobei die gepumpte Referenzelektrode Bestandteil beider Zellen ist. Verschiedene Ausgestaltungen sind denkbar.

Mit dem vorgeschlagenen Sensorelement und der vorgeschlagenen Sensorvorrichtung lassen sich die Nachteile bekannter Sensorelemente und Sensorvorrichtungen zumindest weitgehend vermeiden. Insbesondere lassen sich ein hoher Diffusionswiderstand und ein kleiner Strömungswiderstand erzielen, so dass einerseits CSD-Effekte vermieden oder zumindest weitgehend reduziert werden können. Andererseits lässt sich die Dynamik des Sensorelements erheblich verbessern, da die Offset-Schwankungen, welche durch die Druckänderungen an der gepumpten Referenzelektrode hervorgerufen werden, erfindungsgemäß deutlich reduzierbar sind. Vorzugsweise wird der größte Teil des durch den Referenzgaskanal bedingten Widerstands im kalten Bereich des Sensorelements angeordnet, da dort der Diffusionswiderstand, welcher eine Funktion der Temperatur ist, größer ist und der Strömungswiderstand, welcher ebenfalls eine Funktion der Temperatur ist, kleiner, so dass m mit steigender Temperatur zunimmt und mit fallender Temperatur abnimmt.

Bei Absenkung des Referenzpumpstroms entsteht in der Regel keine Druckabnahme, da der Druck kaum über den Normaldruck ansteigt. Der bei dem erfindungsgemäßen Sensorelement bei offenem Referenzkanal anstehende Druck ist damit nahezu konstant und beeinflusst die Spannung zwischen der gepumpten Referenzelektrode und der mindestens einen weiteren Elektrode nicht mehr messbar. Gleichzeitig kann durch die erfindungsgemäße Ausgestaltung die Gefahr eines CSD durch den dann entsprechend hoch auszulegenden Referenzpumpstrom ebenfalls beseitigt werden.

Im Rahmen dieser Anmeldung beziehen sich die beschriebenen Strömungswiderstände, Diffusionswiderstände und die von diesen Größen abgeleiteten Größen auf ein Gas, das eine Temperatur zwischen 100°C und 400°C hat, und die Zusammensetzung eines Gases hat, das aus Umgebungsluft durch Hinzufügen oder durch Entfernung von Sauerstoff hervorgeht und das unter Normaldruck vorliegt

## Kurze Beschreibung der Zeichnungen

Weitere Einzelheiten und Merkmale bevorzugter Ausgestaltungen der Erfindung ergeben sich aus den nachfolgenden Ausführungsbeispielen, in Verbindung mit den Figuren.

Es zeigen:

Figur 1      ein Ausführungsbeispiel einer erfindungsgemäßen Sensorvorrichtung;

Figur 2      einen Querschnitt durch eine mögliche Ausgestaltung eines Referenzgaskanals eines bevorzugten Sensorelements; und

Figur 3      schematisch die Einflüsse einer Referenzgasverschmutzung und eines Überdrucks bei unterschiedlichen Füllungen und unterschiedlichen wirksamen offenen Flächen des Referenzgaskanals.

## Ausführungsformen der Erfindung

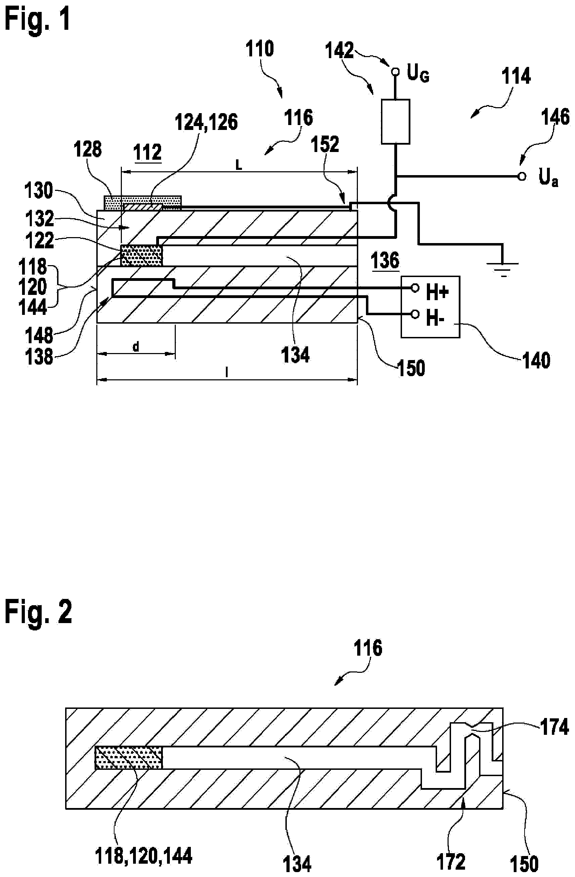

In Figur 1 ist ein Ausführungsbeispiel einer erfindungsgemäßen Sensorvorrichtung 110 zur Erfassung mindestens einer Eigenschaft eines Gases in einem Messgasraum 112 in einer Schnittdarstellung von der Seite dargestellt. Die Sensorvorrichtung 110 umfasst eine Steuerung 114 und mindestens ein Sensorelement 116, welches mit der Steuerung 114 verbunden oder verbindbar ist.

Das Sensorelement 116 umfasst in diesem Ausführungsbeispiel eine Elektrode 118, welche im Folgenden auch als Referenzelektrode 120 bezeichnet wird und welche ein poröses, gasdurchlässiges Elektrodenmaterial 122 in einem Inneren eines Schichtaufbaus des Sensorelements 116 umfasst. Weiterhin umfasst die Sensorvorrichtung 110 in dem dargestellten Ausführungsbeispiel eine weitere Elektrode 124, welche in diesem Ausführungsbeispiel auf einer äußeren, dem Messgasraum 112 zuweisenden Oberfläche des Sensorelements 116 angeordnet sein kann und dementsprechend auch als Außenelektrode 126 bezeichnet werden kann. Die Außenelektrode 126 steht über eine poröse, gasdurchlässige Schutzschicht 128 mit dem Messgasraum 112 in Verbindung und ist mit der Referenzelektrode 120 über einen Festelektrolyten 130 zu einer Zelle 132 verbunden, welche als Pumpzelle und/oder als Nernstzelle einsetzbar ist. Die Referenzelektrode 120 ist über einen Referenzgaskanal 134 mit einem Umgebungsraum 136 verbunden, beispielsweise der Umgebungsluft. Der Referenzgaskanal 134 weist eine Länge L auf, welche typischerweise bei ca. 30 mm liegen kann.

Weiterhin weist das Sensorelement 116 in dem dargestellten Ausführungsbeispiel ein Heizelement 138 auf, welches eingerichtet ist, um den Messbereich im Bereich der Referenzelektrode 120 und/oder der Zelle 132 auf eine Temperatur von typischerweise 780 °C bis 800 °C aufzuheizen. Zu diesem Zweck kann die Steuerung 114 beispielsweise einen in Figur 1 angedeuteten Heizleistungsgenerator 140 umfassen, um das Heizelement 138 über Heizerkontakte H⁺, H⁻ mit elektrischer Heizleistung zu beaufschlagen.

Weiterhin umfasst die Steuerung 114 in dem dargestellten Ausführungsbeispiel eine Beaufschlagungsvorrichtung 142, um die Zelle 132 mit einer Pumpspannung und/oder einem Pumpstrom zu beaufschlagen, dergestalt, dass Sauerstoffionen von der Außenelektrode 126 zur Referenzelektrode 120 gepumpt werden. Auf diese Weise kann sich an der Referenzelektrode 120 ein Sauerstoffvorrat aufbauen, so dass die Referenzelektrode 120 als gepumpte Referenz 144 betrieben werden kann. Die Beaufschlagungsvorrichtung 142, welche in Figur 1 lediglich symbolisch dargestellt ist, kann auf verschiedene Weisen gestaltet werden.

Weiterhin umfasst die Steuerung 114 eine Messvorrichtung 146, welche in Figur 1 lediglich symbolisch dargestellt ist. Diese Messvorrichtung 146 ist eingerichtet, um eine Spannung zwischen der Referenzelektrode 120 und der Außenelektrode 126 zu erfassen, welche beispielsweise ein Maß für einen Sauerstoffpartialdruck und/oder eine Sauerstoffkonzentration in dem Messgasraum 112 darstellen kann.

Das gesamte Sensorelement 116 weist typischerweise in seiner Längserstreckungsrichtung eine Länge I auf, welche bei ca. 35 mm liegt. Auch andere Ausgestaltungen sind jedoch grundsätzlich möglich. Der eigentliche Bereich der Zelle 132, in welchem die oben genannte Betriebstemperatur auftritt, erstreckt sich üblicherweise um eine Distanz d von einer Stirnseite 148 des Sensorelements 116 von ca. 10 mm in Richtung des hinteren Endes 150 des Sensorelements 116. Während typischerweise im Bereich der Zelle 132 die genannten Temperaturen von ca. 780 bis 800 °C auftreten, tritt im Bereich von Anschlusskontakten 152 am hinteren Ende 150 des Sensorelements typischerweise eine Temperatur von 500 bis 550 °C auf.

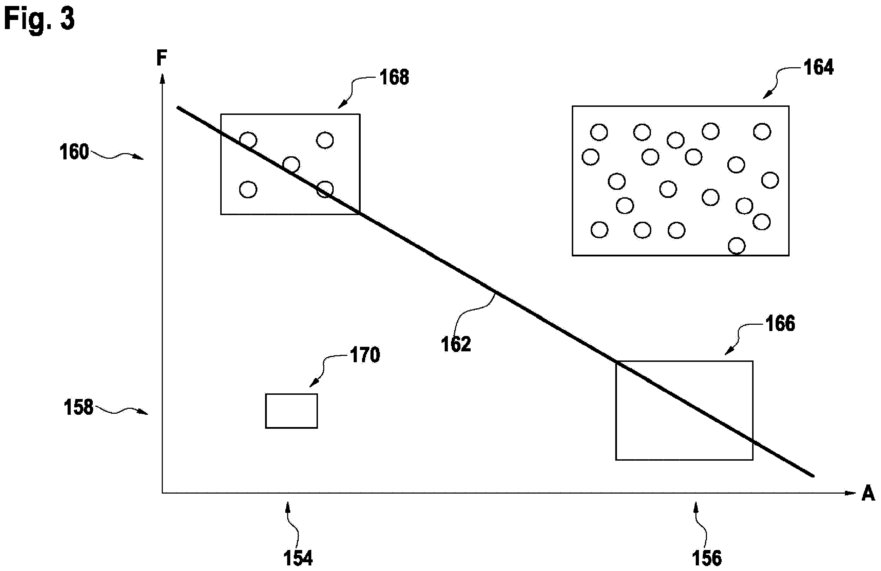

Wie oben beschrieben, ist der Referenzgaskanal 134 offen. In Figur 1 ist dieser, abgesehen von der Referenzelektrode 120 selbst, als offener Referenzgaskanal dargestellt. In Figur 3 sind schematisch die beiden Effekte dargestellt, über welche der Referenzgaskanal 134 das Verhalten des Sensorelements 116 maßgeblich beeinflussen kann. Auf der horizontalen Achse ist dabei die wirksame offene Fläche A aufgetragen, wobei ein Bereich mit kleiner wirksamer Fläche symbolisch mit der Bezugsziffer 154 bezeichnet ist, und ein Bereich mit großer wirksamer Fläche symbolisch mit der Bezugsziffer 156. Auf der vertikalen Achse ist hingegen die Art der Füllung des Referenzgaskanals 134 aufgetragen. Symbolisch ist ein Bereich, in welchem der Referenzgaskanal 134 offen ausgestaltet ist, mit der Bezugsziffer 158 bezeichnet, und ein Bereich, in welchem der Referenzgaskanal mit einem stark porösen Material gefüllt ist, mit der Bezugsziffer 160. Weiterhin ist eine Linie in dem Diagramm eingetragen, welche mit der Bezugsziffer 162 bezeichnet ist und welche Referenzgaskanäle 134 mit gleichem Querschnitt bezeichnet.

Symbolisch sind in dem Diagramm in Figur 3 vier Fälle aufgetragen. Zunächst bezeichnet ein mit der Bezugsziffer 164 bezeichneter Fall einen Referenzgaskanal 134 mit großer wirksamer offener Fläche, welcher stark porös ist. In diesem Fall tritt characteristic shift down auf, da Gase aus dem Umgebungsraum 136, insbesondere Fettgase, zur Referenzelektrode 120 gelangen können. Grund hierfür ist der zu geringe Diffusionswiderstand des Referenzgaskanals 134 im Fall 164. Gleichzeitig tritt jedoch in diesem Fall kein Überdruck oder nur ein relativ geringer Überdruck an der Referenzelektrode 120 auf, da sich dieser aufgrund der hohen wirksamen offenen Fläche leicht hin zum Umgebungsraum 136 aufbauen kann. Eine hohe Porosität bedingt in der Regel eine große wirksame offene Fläche, was wiederum einen kleinen Strömungswiderstand bedingt, wodurch ein Überdruck zumindest weitgehend beseitigt werden kann.

Mit der Bezugsziffer 166 ist ein Fall bezeichnet, in welchem der Referenzgaskanal 134 eine große wirksame offene Fläche aufweist und gleichzeitig offen ausgestaltet ist. In diesem Fall tritt aufgrund des geringen Strömungswiderstands des Referenzgaskanals 134 wiederum kein Überdruck an der Referenzelektrode 120 auf. Aufgrund des geringen Diffusionswiderstands können jedoch wiederum Fettgase vom Umgebungsraum 136 her leicht zur Referenzelektrode 120 vordringen, so dass CSD entstehen kann.

Weiterhin ist in Figur 3 mit der Bezugsziffer 168 ein Fall bezeichnet, in welchem der Referenzgaskanal 134 eine kleine wirksame offene Fläche aufweist und gleichzeitig porös ausgestaltet ist. Aufgrund des hohen Diffusionswiderstands tritt in diesem Fall kein oder lediglich geringer CSD auf. Gleichzeitig tritt jedoch aufgrund des hohen Strömungswiderstands ein Überdruck im Bereich der Referenzelektrode 120 auf.

Mit der Bezugsziffer 170 ist schließlich der erfindungsgemäß bevorzugte Fall beschrieben, in welchem eine kleine wirksame offene Fläche des Referenzgaskanals 134 zu verzeichnen ist, bei gleichzeitig offener Ausgestaltung. In diesem Fall tritt aufgrund des hohen Diffusionswiderstands kein oder lediglich geringer CSD auf, wohingegen aufgrund des geringen Strömungswiderstands gleichzeitig auch kein Überdruck im Bereich der Referenzelektrode 120 aufgebaut werden kann oder lediglich ein geringfügiger Überdruck. Wie oben dargestellt, lässt sich das Verhältnis aus Diffusionswiderstand und Strömungswiderstand durch die Größe m bezeichnen, welche umgekehrt proportional ist zum Quadrat des Äquivalentdurchmessers des Referenzgaskanals 134.

Vorzugsweise wird, wie ebenfalls oben ausgeführt, der größere Teil des Widerstands, welchen der Referenzgaskanal 134 einer Strömung und/oder einer Diffusion entgegensetzt, in einem kalten Bereich des Sensorelements 116 angeordnet, da dort der Diffusionswiderstand, welcher als Funktion der Temperatur abfällt, größer ist, und der Strömungswiderstand, welcher als Funktion der Temperatur ansteigt, kleiner ist. Der Faktor m nimmt somit mit der Temperatur zu. Da das Sensorelement 116 nicht beliebig lang ausgestaltet werden kann, und da für viele Anwendungen kleine, kurze Sensorelemente 116 gefordert sind (also Sensorelemente mit kleiner Länge I), kann erfindungsgemäß der Referenzgaskanal 134 künstlich verlängert werden, um die oben beschriebene Bedingung, dass ein größerer Teil dieses Referenzgaskanals 134 in einem kalten Bereich des Sensorelements 116 angeordnet ist, zu erfüllen. Zwei Möglichkeiten, um dies zu erreichen, sind in Figur 2 dargestellt. Diese Möglichkeiten sind einzeln oder auch in Kombination realisierbar.

So ist zum einen in Figur 2 dargestellt, dass der Referenzgaskanal 134 in einem kalten Bereich, welcher näher am hinteren Ende 150 des Sensorelements 116 liegt, künstlich verlängert sein kann, im Vergleich zu einem geraden Verlauf des Referenzgaskanals 134. So kann der Referenzgaskanal 134 beispielsweise in diesem Bereich eine Doppelschlaufe 172 aufweisen, insbesondere in einem Bereich der Anschlusskontakte 152. Weiterhin kann das Sensorelement 116 in diesem Bereich beispielsweise mindestens eine Verengung 174 oder Engstelle aufweisen, welche alternativ oder zusätzlich zu der Doppelschlaufe 172 realisierbar ist und welche in Figur 2 symbolisch dargestellt ist. Auch diese Verengung 174 in einem ansonsten vorzugsweise mit konstantem Querschnitt ausgestatteten Referenzgaskanal 134 kann auf verschiedene Weisen ausgestaltet sein.

**Patentansprüche**

1. Sensorelement (116) zur Erfassung des Anteils von Sauerstoff eines Gases in einem Messgasraum (112), wobei das Sensorelement (116) mindestens eine Elektrode (118) aufweist, wobei das Sensorelement (116) mindestens eine weitere Elektrode (124) aufweist, wobei die Elektrode (118) und die mindestens eine weitere Elektrode (124) über mindestens einen Festelektrolyten (130) verbunden sind, wobei die weitere Elektrode (124) mit Gas aus dem Messgasraum (112) beaufschlagbar ist, wobei die Elektrode (118) über mindestens einen Referenzgaskanal (134) mit mindestens einem Umgebungsraum (136) verbunden ist, wobei der Referenzgaskanal als offener, ungefüllter Referenzgaskanal (134) ausgestaltet ist, **dadurch gekennzeich-**

**net, dass** der Referenzgaskanal (134) eine wirksame offene Querschnittsfläche 900 $\mu$m$^2$ bis 2.500 $\mu$m$^2$ aufweist und dass der Referenzgaskanal (134) einen Strömungswiderstand und einen Diffusionswiderstand aufweist, wobei ein Verhältnis m zwischen dem Strömungswiderstand und dem Diffusionswiderstand kleiner ist als 0,1; wobei der Diffusionswiderstand $R_{Diffusion}$ gegeben ist durch

$$R_{Diffusion} = \frac{\Delta p_i}{I_p^{Diffusion}},$$

wobei $\Delta p_i$ die Partialdruckdifferenz von Sauerstoff ist, und $I_p^{Diffusion}$ der Diffusionsstrom von Sauerstoff ist,
und wobei der Strömungswiderstand $R_{Strömung}$ gegeben ist durch

$$R_{Strömung} = \frac{\Delta p_g}{I_p^{Strömung}},$$

wobei $I_p^{Strömung}$ den Strömungsanteil eines Gasaustauschs durch den Referenzgaskanal bezeichnet, welcher durch die Gesamtdruckdifferenz $\Delta p_g$ angetrieben wird, und dass m gegeben ist durch

$$m = \frac{R_{Strömung}}{R_{Diffusion}}$$

und wobei sich der Strömungswiderstand und der Diffusionswiderstand und der Parameter m auf ein Bezugsgas beziehen, das eine Temperatur zwischen 100°C und 400°C hat, das aus Umgebungsluft durch Hinzufügen oder durch Entfernung von Sauerstoff hervorgeht und das unter Normaldruck vorliegt.

2. Sensorelement (116) nach dem vorhergehenden Anspruch, wobei das Sensorelement (116) weiterhin mindestens ein Heizelement (138) aufweist, wobei das Heizelement (138) eingerichtet ist, um das Sensorelement (116) an der Elektrode (118) auf eine Temperatur $T_{el}$ von mindestens 600 °C bis 800 °C aufzuheizen.

3. Sensorelement (116) nach dem vorhergehenden Anspruch, wobei mehr als die Hälfte des Referenzgaskanals (134) in einem Bereich des Sensorelements (116) angeordnet ist, in welchem die Temperatur des Sensorelements (116) nicht mehr als 0,8 $T_{el}$ beträgt, insbesondere nicht mehr als 0,75 $T_{el}$ und besonders bevorzugt nicht mehr als 0,7 $T_{el}$.

**4.** Sensorelement (116) nach einem der beiden vorhergehenden Ansprüche, wobei der Referenzgaskanal (134) mindestens einen nicht-geraden Bereich aufweist, insbesondere einen Bereich mit mindestens einem Mäander und/oder mindestens einer Doppelschlaufe (172).

**5.** Sensorelement (116) nach dem vorhergehenden Anspruch, wobei der nicht-gerade Bereich in einem Bereich angeordnet ist, in welchem im Betrieb des Sensorelements (116) die Temperatur des Sensorelements (116) nicht mehr als 0,8 $T_{el}$ beträgt, insbesondere nicht mehr als 0,75 $T_{el}$ und besonders bevorzugt nicht mehr als 0,7 $T_{el}$, insbesondere in einem Bereich, in welchem mindestens ein Anschlusskontakt (152) der Elektrode (118) angeordnet ist.

**6.** Sensorelement (116) nach einem der vier vorhergehenden Ansprüche, wobei der Referenzgaskanal (134) mindestens eine Verengung (174) aufweist, wobei die Verengung (174) in einem Bereich angeordnet ist, in welchem im Betrieb des Sensorelements (116) die Temperatur des Sensorelements (116) nicht mehr als 0,8 $T_{el}$ beträgt, insbesondere nicht mehr als 0,75 $T_{el}$ und besonders bevorzugt nicht mehr als 0,7 $T_{el}$, insbesondere in einem Bereich, in welchem mindestens ein Anschlusskontakt (152) der Elektrode (118) angeordnet ist.

**7.** Sensorelement (116) nach einem der vorhergehenden Ansprüche, wobei die weitere Elektrode (124) mit Gas aus dem Messgasraum (112) über mindestens eine gasdurchlässige poröse Schutzschicht (128) beaufschlagbar ist.

**8.** Sensorvorrichtung zur Erfassung mindestens einer Eigenschaft eines Gases in einem Messgasraum (112), umfassend mindestens ein Sensorelement (116) nach einem der vorhergehenden Ansprüche, weiterhin umfassend mindestens eine mit dem Sensorelement (116) verbindbare Steuerung (114), wobei die Steuerung (114) eingerichtet ist, um die Elektrode (118) als gepumpte Referenzelektrode (144) zu betreiben, wobei mindestens eine Spannung zwischen der gepumpten Referenzelektrode (144) und mindestens einer weiteren Elektrode (124) des Sensorelements (116) erfasst wird und wobei über mindestens einen Referenzpumpstrom mindestens eine Gaskomponente, insbesondere Sauerstoff, zu der gepumpten Referenzelektrode (144) gepumpt wird.

**Claims**

**1.** Sensor element (116) for detecting the proportion of oxygen of a gas in a measurement gas space (112), wherein the sensor element (116) has at least one electrode (118), wherein the sensor element (116) has at least one further electrode (124), wherein the electrode (118) and the at least one further electrode (124) are connected via at least one solid electrolyte (130), wherein the further electrode (124) can be exposed to gas from the measurement gas space (112), the electrode (118) being connected via at least one reference gas channel (134) to at least one surrounding space (136), the reference gas channel being configured as an open, unfilled reference gas channel (134), **characterized in that** the reference gas channel (134) has an effective open cross-sectional area of 900 $\mu m^2$ to 2500 $\mu m^2$ and **in that** the reference gas channel (134) has a flow resistance and a diffusion resistance, a ratio m between the flow resistance and the diffusion resistance being less than 0.1; wherein the diffusion resistance $R_{diffusion}$ is given by

$$R_{diffusion} = \frac{\Delta p_i}{I_p^{diffusion}}$$

where $\Delta p_i$ is the partial pressure difference of oxygen, and $I_p^{diffusion}$ is the diffusion flow of oxygen,
and wherein the flow resistance $R_{flow}$ is given by

$$R_{flow} = \frac{\Delta p_g}{I_p^{flow}}$$

where $I_p^{flow}$ denotes the proportion of flow of a gas exchange through the reference gas channel that is driven by the overall pressure difference $\Delta p_g$, and **in that** m is given by

$$m = \frac{R_{flow}}{R_{diffusion}}$$

and wherein the flow resistance and the diffusion resistance and the parameter m refer to a reference gas, which has a temperature between 100°C and 400°C, which is obtained from ambient air by adding or removing oxygen and which is under normal pressure.

**2.** Sensor element (116) according to the preceding claim, wherein the sensor element (116) also has at least one heating element (138), wherein the heating element (138) is configured to heat the sensor element (116) on the electrode (118) to a temperature

$T_{el}$ of at least 600°C to 800°C.

3. Sensor element (116) according to the preceding claim, wherein more than half of the reference gas channel (134) is arranged in a region of the sensor element (116) in which the temperature of the sensor element (116) is no more than 0.8 $T_{el}$, in particular no more than 0.75 $T_{el}$ and particularly preferably no more than 0.7 $T_{el}$.

4. Sensor element (116) according to one of the two preceding claims, wherein the reference gas channel (134) has at least one non-straight region, in particular a region having at least one meander and/or at least one double loop (172).

5. Sensor element (116) according to the preceding claim, wherein the non-straight region is arranged in a region in which, during operation of the sensor element (116), the temperature of the sensor element (116) is no more than 0.8 $T_{el}$, in particular no more than 0.75 $T_{el}$ and particularly preferably no more than 0.7 $T_{el}$, in particular in a region in which at least one connecting contact (152) of the electrode (118) is arranged.

6. Sensor element (116) according to one of the four preceding claims, wherein the reference gas channel (134) has at least one narrowing (174), wherein the narrowing (174) is arranged in a region in which, during operation of the sensor element (116), the temperature of the sensor element (116) is no more than 0.8 $T_{el}$, in particular no more than 0.75 $T_{el}$ and particularly preferably no more than 0.7 $T_{el}$, in particular in a region in which at least one connecting contact (152) of the electrode (118) is arranged.

7. Sensor element (116) according to one of the preceding claims, wherein the further electrode (124) can be exposed to gas from the measurement gas space (112) via at least one gas-permeable porous protective layer (128).

8. Sensor device for detecting at least one property of a gas in a measurement gas space (112), comprising at least one sensor element (116) according to one of the preceding claims, further comprising at least one control system (114) that can be connected to the sensor element (116), wherein the control system (114) is configured to operate the electrode (118) as a pumped reference electrode (144), wherein at least one voltage between the pumped reference electrode (144) and at least one further electrode (124) of the sensor element (116) is detected, and wherein at least one gas component, in particular oxygen, is pumped to the pumped reference electrode (144) via at least one reference pump current.

**Revendications**

1. Élément formant capteur (116) destiné à détecter au moins une proportion d'oxygène d'un gaz dans un espace de gaz de mesure (112), l'élément formant capteur (116) comportant au moins une électrode (118), l'élément formant capteur (116) comportant au moins une autre électrode (124), l'électrode (118) et l'au moins une autre électrode (124) étant reliées par le biais d'au moins un électrolyte solide (130), l'autre électrode (124) pouvant être soumise à un gaz provenant de l'espace de gaz de mesure (112), l'électrode (118) étant reliée à au moins un espace environnemental (136) par le biais d'un conduit de gaz de référence (134), le conduit de gaz de référence étant conçu comme un conduit de gaz de référence ouvert non rempli (134), **caractérisé en ce que** le conduit de gaz de référence (134) a une section transversale ouverte active de 900 $\mu m^2$ à 2500 $\mu m^2$ et **en ce que** le conduit de gaz de référence (134) présente une résistance à l'écoulement et une résistance à la diffusion, un rapport m entre la résistance à l'écoulement et la résistance à la diffusion étant inférieur à 0,1, la résistance à la diffusion $R_{diffusion}$ étant donnée par

$$R_{diffusion} = \frac{\Delta p_i}{I_p^{diffusion}},$$

$\Delta p_i$ étant la différence de pression partielle de l'oxygène et $I_p^{diffusion}$ étant le courant de diffusion de l'oxygène,
et la résistance à l'écoulement $R_{diffusion}$ étant donnée par

$$R_{écoulement} = \frac{\Delta p_g}{I_p^{écoulement}},$$

$I_p^{écoulement}$ désignant la proportion d'écoulement d'un échange de gaz à travers le conduit de gaz de référence qui est entraîné par la différence de pression totale $\Delta p_g$ et **en ce que** m et donné par

$$m = \frac{R_{écoulement}}{R_{diffusion}}$$

et la résistance à l'écoulement et la résistance à la diffusion et le paramètre se rapportant à un gaz de référence qui a une température comprise entre 100°C et 400°C, qui vient de l'air d'environnement par ajout ou retrait d'oxygène et qui est présent à la pression normale.

2. Élément formant capteur (116) selon l'une des revendications précédentes, l'élément formant capteur (116) comprenant en outre au moins un élément chauffant (138), l'élément chauffant (138) étant adapté pour chauffer l'élément formant capteur (116) au niveau de l'électrode (118) à une température $T_{el}$ d'au moins 600 °C à 800 °C.

3. Élément formant capteur (116) selon la revendication précédente, plus de la moitié du conduit de gaz de référence (134) étant disposée dans une région de l'élément formant capteur (116) dans laquelle la température de l'élément formant capteur (116) n'est pas supérieure à 0,8 $T_{el}$, notamment pas supérieure à 0,75 $T_{el}$ et plus préférablement pas supérieure à 0,7 $T_{el}$.

4. Élément formant capteur (116) selon l'une des deux revendications précédentes, le conduit de gaz de référence (134) comportant au moins une région non rectiligne, en particulier une région pourvue d'au moins un méandre et/ou d'au moins une double boucle (172).

5. Élément formant capteur (116) selon la revendication précédente, la région non rectiligne étant disposée dans une région dans laquelle la température de l'élément formant capteur (116) pendant le fonctionnement de l'élément formant capteur (116) n'est pas supérieure à 0,8 $T_{el}$, en particulier pas supérieure à 0,75 $T_{el}$ et de manière particulièrement préférée pas supérieure à 0,7 $T_{el}$, en particulier dans une région dans laquelle est disposé au moins un contact de borne (152) de l'électrode (118).

6. Élément formant capteur (116) selon l'une des quatre revendications précédentes, le conduit de gaz de référence (134) comportant au moins un rétrécissement (174), le rétrécissement (174) étant disposé dans une région dans laquelle la température de l'élément formant capteur (116) pendant le fonctionnement de l'élément formant capteur (116) n'est pas supérieure à 0,8 $T_{el}$, en particulier pas supérieure à 0,75 $T_{el}$ et de manière particulièrement préférée pas supérieure à 0,7 $T_{el}$, en particulier dans une région dans laquelle est disposé au moins un contact de borne (152) de l'électrode (118).

7. Élément formant capteur (116) selon la revendication précédente, l'autre électrode (124) pouvant être alimentée en gaz provenant de l'espace de gaz de mesure (112), en particulier par le biais d'au moins une couche de protection poreuse (128) perméable aux gaz.

8. Dispositif de détection, destiné à détecter au moins une propriété d'un gaz dans un espace de gaz de mesure (112), comprenant au moins un élément formant capteur (116) selon l'une des revendications précédentes, comprenant en outre au moins un moyen de commande (114) pouvant être relié à l'élément formant capteur (116), le moyen de commande (114) étant adapté pour faire fonctionner l'électrode (118) comme une électrode de référence pompée (144), au moins une tension étant détectée entre l'électrode de référence pompée (144) et au moins une autre électrode (124) de l'élément formant capteur (116), et au moins un composant gazeux, en particulier de l'oxygène, étant pompé vers l'électrode de référence pompée (144) par le biais d'au moins un écoulement de pompe de référence.

## Fig. 1

## Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005052430 A1
- US 20030089603 A1
- DE 4333230 A1
- DE 102008002735 A1
- WO 2009156007 A1

**In der Beschreibung aufgeführte Nicht-Patentliteratur**

- **ROBERT BOSCH.** GmbH: Sensoren im Kraftfahrzeug. 2007, 154-159